(19) **Europäisches Patentamt / European Patent Office / Office européen des brevets**

(11) **EP 4 734 633 A1**

(12) **EUROPEAN PATENT APPLICATION**
published in accordance with Art. 153(4) EPC

(43) Date of publication:
29.04.2026  Bulletin 2026/18

(21) Application number: 24850628.9

(22) Date of filing: 20.05.2024

(51) International Patent Classification (IPC):
$H04W\ 72/044^{(2023.01)}$

(52) Cooperative Patent Classification (CPC):
H04L 5/00; H04W 72/044; H04W 72/0446;
H04W 72/0453; H04W 72/20; H04W 72/512

(86) International application number:
PCT/CN2024/094111

(87) International publication number:
WO 2025/030975 (13.02.2025 Gazette 2025/07)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority:  07.08.2023  CN 202310985701

(71) Applicant: ZTE Corporation
Shenzhen, Guangdong  518057 (CN)

(72) Inventors:
• SI, Yuan
Shenzhen, Guangdong 518057 (CN)
• ZHANG, Shujuan
Shenzhen, Guangdong 518057 (CN)
• YU, Hongkang
Shenzhen, Guangdong 518057 (CN)
• CHEN, Yijian
Shenzhen, Guangdong 518057 (CN)

(74) Representative: Aipex B.V.
Vestdijk 51
5611 CA Eindhoven (NL)

(54) **MEASUREMENT REFERENCE SIGNAL DETERMINATION METHOD, ELECTRONIC DEVICE, AND STORAGE MEDIUM**

(57)    Provided are a measurement reference signal determination method, an electronic device, and a storage medium. The method includes: receiving a measurement reference signal sent by a first node (110); and determining N beam indices corresponding to the measurement reference signal within M beam indices (120), where N is an integer greater than or equal to 1, M denotes the total number of beam indices, and M is an integer greater than or equal to 1. In this manner, the rapid feedback of the measurement results of measurement reference signals can be achieved, and the problem of a long beam training duration in the multi-antenna scenario can be solved, thereby improving the beam training speed and reducing the signal transmission delay.

Receive a measurement reference signal sent by a first node — 110

Determine N beam indices corresponding to the measurement reference signal within M beam indices — 120

**FIG. 1**

EP 4 734 633 A1

**Description**

TECHNICAL FIELD

The present application relates to the technical field of wireless communications and, in particular, to a measurement reference signal determination method, an electronic device, and a storage medium.

BACKGROUND

Currently, to obtain the array gain brought by multi-antenna technologies, both the transmitting end and the receiving end need to perform beam training at the initial stage of signal transmission. Through beam training, the beams at the transmitting end and the receiving end are searched to find the optimal transmit beam and the optimal receive beam. However, with the development of wireless communications technologies, the number of antennae gradually increases, the transmit frequency band also gradually becomes higher, and the beams emitted by the antenna array become narrower, causing the number of beams to gradually increase. As a result, when the traditional polling method in which each reference signal corresponds to one beam for beam training is adopted, the number of training times and the training duration increase significantly, resulting in a higher signal transmission delay. Currently, there is an urgent need for a parameter determination method for measurement reference signals in which one measurement reference signal can correspond to multiple beams, thereby improving the beam training speed and reducing the signal transmission delay.

SUMMARY

The embodiments of the present application provide a measurement reference signal determination method, an electronic device, and a storage medium, aiming to solve the problem of a long beam training duration in the multi-antenna scenario, achieve the rapid feedback of the measurement results of measurement reference signals, improve the beam training speed, and reduce the signal transmission delay.

An embodiment of the present application provides a measurement reference signal determination method. The method includes the following.

A measurement reference signal sent by a first node is received.

N beam indices corresponding to the measurement reference signal are determined within M beam indices, where N is an integer greater than or equal to 1, M denotes the total number of beam indices, and M is an integer greater than or equal to 1.

An embodiment of the present application further provides an electronic device. The electronic device includes one or more processors and a memory configured to store one or more programs.

The one or more processors are configured to perform the measurement reference signal determination method of any embodiment of the present application when executing the one or more programs.

An embodiment of the present application further provides a computer-readable storage medium. The computer-readable storage medium stores one or more programs. The one or more programs are configured to, when executed by one or more processors, cause the one or more processors to perform the measurement reference signal determination method of any embodiment of the present application.

BRIEF DESCRIPTION OF DRAWINGS

FIG. 1 is a flowchart of a measurement reference signal determination method according to an embodiment of the present application.

FIG. 2 is an example diagram of time indices of measurement reference signals according to an embodiment of the present application.

FIG. 3 is an example diagram illustrating the sending of measurement reference signals according to an embodiment of the present application.

FIG. 4 is an example diagram illustrating the sending of measurement reference signals in groups according to an embodiment of the present application.

FIG. 5 is an example diagram of different measurement reference signal set resources according to an embodiment of the present application.

FIG. 6 is an example diagram of time-frequency-code division of measurement reference signals according to an embodiment of the present application.

FIG. 7 is an example diagram of the input-output mapping relationship of a preset function according to an embodiment of the present application.

FIG. 8 is a diagram illustrating the structure of a measurement reference signal determination apparatus according to an embodiment of the present application.

FIG. 9 is a diagram illustrating the structure of an electronic device according to an embodiment of the present application.

DETAILED DESCRIPTION

It is to be understood that the embodiments described herein are intended to explain the present application, not to limit the present application.

In the subsequent description, a word such as "module", "component", or "unit" for representing an element is used merely to facilitate the description of the present application and has no particular meaning in itself. Therefore, "module", "component", and "unit" may be used in a mixed manner.

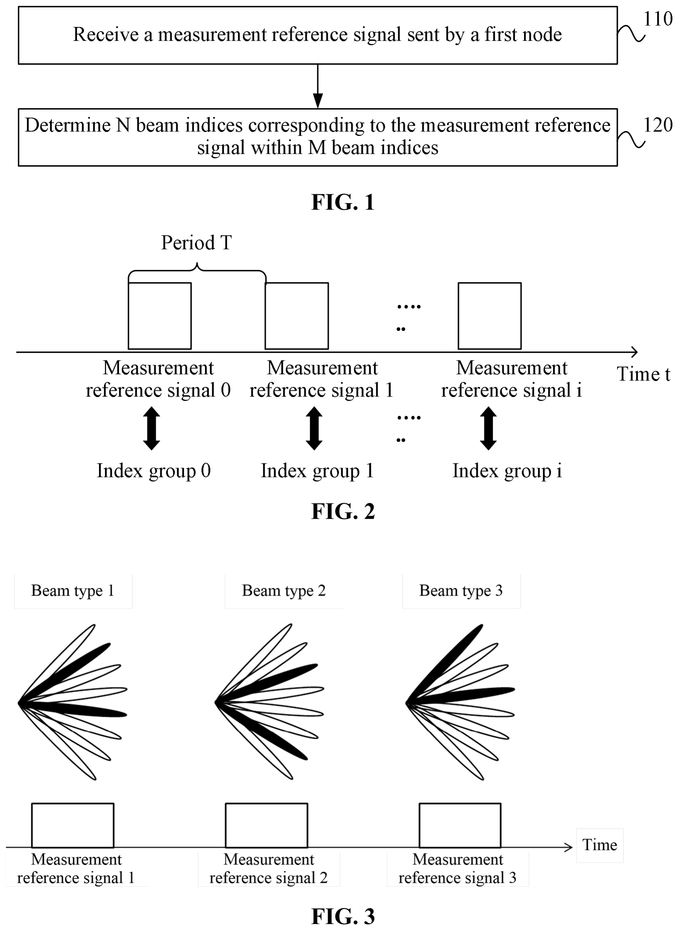

FIG. 1 is a flowchart of a measurement reference signal determination method according to an embodiment of the present application. The embodiment of the present application may be applied to the case of reporting measurement reference signals during beam training. The method may be performed by a measurement reference signal determination apparatus. The apparatus is generally integrated into the user terminal and may be implemented by software and/or hardware. As shown in FIG. 1, the method of the embodiment of the present application includes the following.

In 110, a measurement reference signal sent by a first node is received.

The first node may be a node that transmits the measurement reference signal. The first node may include a base station or other user terminals. The measurement reference signal may be a known signal provided by a transmitting end to a receiving end and used for channel estimation or channel sounding.

In the embodiment of the present application, the user terminal may receive the measurement reference signal sent by the first node such as the base station or other user terminals.

In 120, N beam indices corresponding to the measurement reference signal are determined within M beam indices, where N is an integer greater than or equal to 1, M denotes the total number of beam indices, and M is an integer greater than or equal to 1.

M denotes the total number of beam indices, N denotes the number of selected beam indices, and M may be an integer greater than or equal to N.

In the embodiment of the present application, the beam indices corresponding to the measurement reference signal may be determined, and the N beam indices may be determined for the measurement reference signal within all the M beam indices. For example, the base station has a total of M transmit beams, that is, a total of M beam indices exist. The user terminal may receive the measurement reference signal transmitted by the base station through the transmit beams. After receiving the measurement reference signal, the user terminal may determine the N beam indices of the transmit beams for transmitting the measurement reference signal within the M beam indices.

In some embodiments of the present application, the N beam indices are represented by a beam type B, the beam type B satisfies $B = C_M^N$, M denotes the total number of beam indices, and $C_M^N$ denotes the number of combinations of selecting N elements from M elements.

In the embodiment of the present application, the determined N beam indices may be represented by the beam type B, different beam types B may correspond to different beam indices, and the beam type B may be the number of combinations of selecting N elements from M elements.

In some embodiments of the present application, the N beam indices are determined according to at least one of the following:

signaling information received from the first node;

a resource where the measurement reference signal is located, where the resource includes at least one of the following: a time domain resource, a frequency domain resource, or a code domain resource; or

a preset function.

In the embodiment of the present application, the N beam indices may be determined through the signaling information from the first node. The signaling information may include Master Information Block (MIB) control signaling, System Information Block (SIB) control signaling, Downlink Control Information (DCI) control signaling, media access control-control element (MAC-CE) control signaling, and Radio Resource Control (RRC) control signaling. In some embodiments of the present application, the N beam indices may be determined through the resource where the measurement reference signal is located, and the resource may include the time domain resource, the frequency domain resource, and the code domain resource. The N beam indices may be determined through the preset function, and the preset function may determine the N beam indices through the input parameter.

Based on the preceding embodiments of the present application, the signaling information includes at least the signaling information of the preset function.

In the embodiment of the present application, the signaling information for determining the N beam indices may include the signaling information of the preset function for determining the N beam indices, and the signaling information may instruct the preset function to determine the N beam indices.

In some embodiments of the present application, the input parameter of the preset function includes at least one of the following:

the resource where the measurement reference signal is located, where the resource includes at least one of the following: the time domain resource, the frequency domain resource, or the code domain resource; or

the index information of the resource where the measurement reference signal is located within a measurement reference signal resource set.

In the embodiment of the present application, the preset function may determine the corresponding N beam indices through the inputted resource where the measurement reference signal is located, and the resource may include one or more of the time domain resource, the frequency domain resource, or the code domain resource. Alternatively, the preset function may determine the corresponding N beam indices through the index information of the resource of the measurement reference signal within the corresponding measurement reference signal resource set.

In some other embodiments of the present application, the input parameter set of the preset function may include at least one of the following:

the cell identity (cell-ID);

the burst index of the measurement reference signal set; or

the port number of the measurement reference signal.

Based on the preceding embodiments of the present application, the output parameter of the preset function includes at least one of the following: the N beam indices or the beam type B.

In the embodiment of the present application, the preset function may determine the N beam indices for transmitting the measurement reference signal, and the beam type B for transmitting the measurement reference signal.

In an exemplary embodiment, the N beam indices corresponding to the measurement reference signal may be determined according to the resource where the measurement reference signal is located. For example, the N beam indices corresponding to each measurement reference signal may correspond to the resource of the measurement reference signal. Assuming that the N beam indices corresponding to one measurement reference signal form one index group, the correspondence between different measurement reference signal resources and beam index groups may be shown in Table 1. It is to be understood that the resource may include at least one of the time domain resource, the frequency domain resource, or the code domain resource.

Table 1 Example table of the correspondence between resources and index groups

| Measurement reference signal 1 | Measurement reference signal 2 | Measurement reference signal 3 | ... |
|---|---|---|---|
| Resource 1 | Resource 2 | Resource 3 | ... |
| Index group 1 | Index group 2 | Index group 3 | ... |

In some embodiments of the present application, when the measurement reference signals are transmitted in groups periodically, the resources may be the time indices of the measurement reference signals. Referring to FIG. 2, the measurement reference signals are transmitted in a period T. Each period index corresponding to the arrival of the measurement reference signal corresponds to one beam index group. The period index may be the sequence number of the period in which the measurement reference signal arrives. FIG. 3 shows an example diagram illustrating that one measurement reference signal is transmitted by multiple beams.

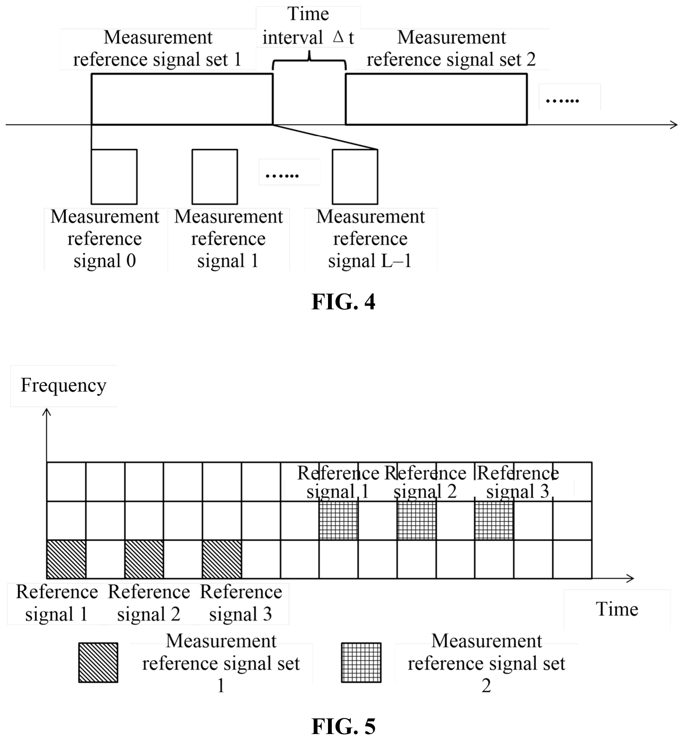

In some other embodiments of the present application, referring to FIG. 4, the measurement reference signals may be transmitted in groups periodically. The measurement reference signals are divided into multiple measurement reference signal sets, and each measurement reference signal set contains L measurement reference signals. Within each measurement reference signal set, the measurement reference signals are transmitted periodically. After measurement reference signals in one measurement reference signal set are transmitted, the transmission of the next measurement reference signal set starts after a time interval $\Delta t$. The transmission of measurement reference signal sets is also performed periodically. Referring to FIG. 4, when the measurement reference signals are transmitted in groups periodically, each measurement reference signal may correspond to one beam index group. For example, the correspondence between measurement reference signals and beam index groups is shown in Table 2.

Table 2 Example table of the correspondence between measurement reference signals, resources, and index groups

| Set 1 Measurement reference signal 1 | Set 1 Measurement reference signal 2 | ... | Set 1 Measurement reference signal X |
|---|---|---|---|
| Resource 1 | Resource 2 | ... | Resource X |
| Index group 1 | Index group 2 | ... | Index group X |
| Set 2 Measurement reference signal 1 | Set 2 Measurement reference signal 2 | ... | Set 2 Measurement reference signal X |
| Resource X+1 | Resource X+2 | ... | Resource 2X |
| Index group X+1 | Index group X+2 | ... | Index group 2X |
| ⋮ | ⋮ | ... | ⋮ |

In some embodiments of the present application, when the measurement reference signals are transmitted in groups periodically, the measurement reference signals within one measurement reference signal set may have the same frequency domain resources and code domain resources, and different measurement reference signals may be distinguished by time domain resources. In some other embodiments of the present application, the measurement reference signals within different reference signal sets may have different frequency domain resources and code domain resources by which different measurement reference signal sets may be distinguished. Referring to FIG. 5, the measurement reference signal set 1 and the measurement reference signal set 2 may occupy different frequency domain resources, and all the reference signals within the same measurement reference signal set have the same frequency domain resources.

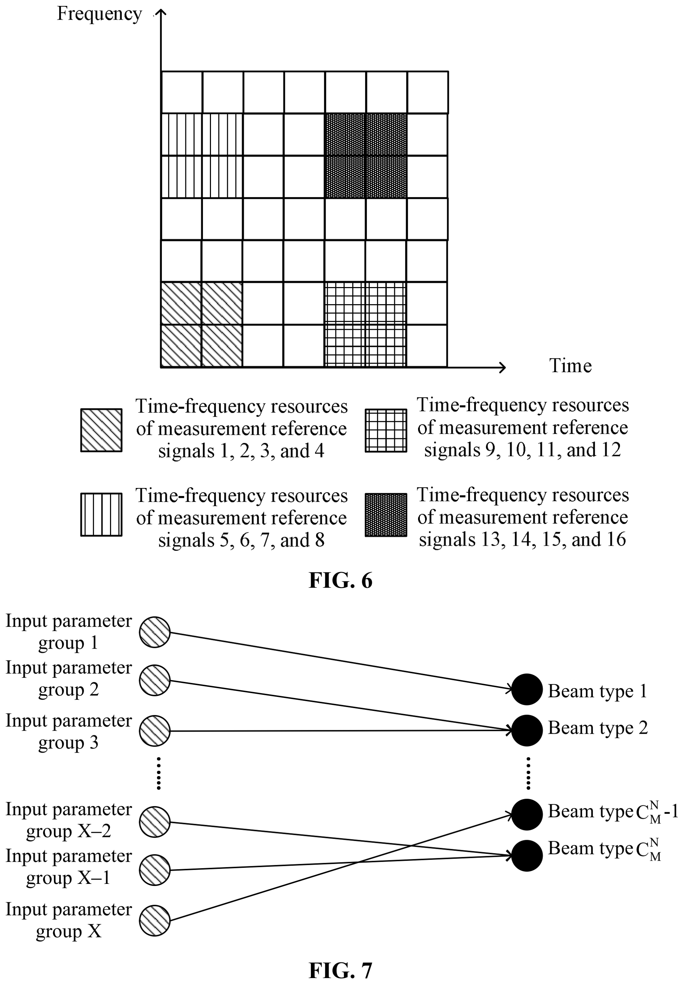

In some other embodiments of the present application, the method for transmitting measurement reference signals may be flexibly configured, and different measurement reference signals may be distinguished using time domain resources, frequency domain resources, and code domain resources. On the one hand, different measurement reference signals may adopt the same time-frequency resources and are distinguished by the orthogonal cover codes (OCCs), that is, code-division multiplexing. On the other hand, different measurement reference signals may be distinguished by different time-frequency resources. Moreover, the two approaches may be combined such that measurement reference signals are distinguished using time domain resources, frequency domain resources, and code domain resources. For example, FIG. 6 illustrates the preceding case when 16 measurement reference signals need to be transmitted. In FIG. 6, each square represents one resource element (RE). As can be seen from FIG. 6, measurement reference signals 1 to 4 occupy the same time-frequency resources, measurement reference signals 5 to 8 occupy the same time-frequency resources, measurement reference signals 9 to 12 occupy the same time-frequency resources, measurement reference signals 13 to 16 occupy the same time-frequency resources, and the measurement reference signals may be distinguished using code division. For example, the OCCs for the measurement reference signals 1, 2, 3, and 4 are shown in Table 3.

Table 3 Illustrative table of code division for measurement reference signals

| Measurement reference signal index | OCC |
|---|---|
| 1 | [+1, +1, +1, +1] |

(continued)

| Measurement reference signal index | OCC |
|---|---|
| 2 | [+1, -1, +1, -1] |
| 3 | [+1, +1, -1, -1] |
| 4 | [-1, +1, +1, -1] |

In the embodiment of the present application, measurement reference signals 1 to 4 and 5 to 8 occupy the same time domain resources and may distinguished using frequency division; measurement reference signals 1 to 4 and 9 to 12 occupy the same frequency domain resources and may be distinguished using time division; and measurement reference signals 1 to 4 and 13 to 16 occupy different time-frequency resources and may be distinguished using time-frequency division. It is to be understood that the time-frequency-code resources of the preceding measurement reference signals may be flexibly configured by the base station, and the user may acquire the resource information of the preceding measurement reference signals according to the signaling of the base station. The signaling may include MIB signaling, SIB signaling, DCI signaling, MAC-CE signaling, and RRC signaling.

In some other embodiments of the present application, the N beam indices corresponding to the measurement reference signal may be determined by the preset function, and the preset function may be agreed upon by both the transmitting end and the receiving end. The input parameter set of the preset function includes at least one of the time domain resource, the frequency domain resource, or the code domain resource where the measurement reference signal is located. The output of the preset function may be the N beam indices or other representations of the N beam indices, and the representations may include, but are not limited to, a bit bitmap and the beam type B.

Based on the preceding embodiments of the present application, the preset function includes the form below.

$$index_k(i) = \sum_{l=1}^{L} 2^l c\big(k\big[(i-1)L + l\big]\big) \quad (1)$$

k denotes the resource index of the measurement reference signal, the resource includes at least one of the time domain resource, the frequency domain resource, or the code domain resource, L denotes the maximum integer that satisfies $2^L \le M$, M denotes the total number of beam indices, and $index(i)$ denotes the i-th beam index among the N beam indices.

In some other embodiments of the present application, when the output of the preset function is the beam type B, the beam type of the measurement reference signal with a resource index of k may be determined by the formula below.

$$B_k = \sum_{l=1}^{L} 2^l c\big((k-1)L + l\big) \quad (2)$$

L denotes the maximum integer that satisfies $2^L \le C_M^N$.

In some other embodiments of the present application, the N beam indices corresponding to the measurement reference signal with a time domain resource index of j and a frequency domain resource index of k may be determined using the formula below.

$$index_{j,k}(i) = \sum_{l=1}^{L} 2^k c\big(j\big[(i-1)L + kl\big]\big) \quad (3)$$

Furthermore, when the input set of the preset function is at least one of the cell-ID denoted by $I_1$, the burst index of the measurement reference signal set denoted by $I_2$, or the port number of the measurement reference signal denoted by $I_3$, the preset function may take one of the forms below.

$$index_k(i) = \sum_{l=1}^{L} 2^l c\left(kI_1\left[(i-1)L+l\right]\right) \quad (4)$$

$$index_k(i) = \sum_{l=1}^{L} 2^l c\left(kI_2\left[(i-1)L+l\right]\right) \quad (5)$$

$$index_k(i) = \sum_{l=1}^{L} 2^l c\left(kI_3\left[(i-1)L+l\right]\right) \quad (6)$$

It is to be understood that the parameters in formulas (4), (5), and (6) have the same meanings as the parameters in formula (1).

In some other embodiments of the present application, the preset function may be implemented using a hash function, and the hash function may map the input parameter set to the beam type B, where $B = 1, 2, \ldots, C_M^N$. As shown in FIG. 7, each input parameter group may correspond to one beam type, and multiple input parameter groups may correspond to one beam type.

In some other embodiments of the present application, the input parameter of the preset function may be determined by the signaling sent by the base station. The signaling may include one or more of the MIB signaling, the SIB signaling, the DCI signaling, the MAC-CE signaling, or the RRC signaling. For example, various preset functions may be pre-agreed upon between the base station and the user terminal, and based on the signaling of the base station, the user determines which preset function and which input parameter to use.

The measurement reference signal determination method provided in the embodiment of the present application further includes: determining a receiving parameter corresponding to each of the N beam indices.

In the embodiment of the present application, after the measurement reference signal is received, the receiving parameters of the measurement reference signal may be determined, and the receiving parameter of each of the N beam indices may be determined according to the receiving parameters. The receiving parameter may include at least one of the following: the Reference Signal Receiving Power (RSRP), the Received Signal Strength Indicator (RSSI), or the Reference Signal Receiving Quality (RSRQ).

In some embodiments of the present application, the receiving parameter corresponding to each of the N beam indices includes a receiving parameter of one measurement reference signal at a predetermined time domain position, and the measurement reference signal at the predetermined time domain position includes the N beam indices.

In the embodiment of the present application, the receiving parameter corresponding to each of the N beam indices may be a receiving parameter of one measurement reference signal at a predetermined time domain position, and the measurement reference signal at the predetermined time domain position may include the N beam indices.

In some embodiments of the present application, the measurement reference signal has at least two different predetermined time domain positions, and the N beam indices corresponding to the measurement reference signal at the at least two different predetermined time domain positions are different.

In the embodiment of the present application, N beam indices corresponding to the measurement reference signal at different predetermined time domain positions are different.

In some embodiments of the present application, the receiving parameter of the beam index is the sum of receiving parameters of the measurement reference signals including the beam index at a preset number of time domain positions.

In the embodiment of the present application, the receiving parameter of one beam index may be the sum of receiving parameters of the measurement reference signals of the beam index at the preset number of time domain positions, and the preset number may be a pre-configured number that can be pre-determined.

In some embodiments of the present application, the beam index set corresponding to the measurement reference signal at each of the preset number of time domain positions includes at least one beam index corresponding to the measurement reference signal.

In the embodiment of the present application, the measurement reference signal at each time domain position corresponds to one beam index set, and at least one beam index in the beam index set is included by the measurement reference signal.

In an exemplary embodiment, when the user terminal receives the measurement reference signal only once, the RSRP is P, and the receiving parameter of each of the N beam indices corresponding to the measurement reference signal is denoted as P.

In some other embodiments of the present application, when the user terminal receives K measurement reference signals, each measurement reference signal corresponds to N beam indices, and at least two measurement reference signals correspond to different sets of N beam indices. After receiving K measurement reference signals, the user terminal may obtain the receiving parameters $P_1$, $P_2$, ..., and $P_K$ corresponding to each measurement reference signal. The user may calculate the receiving parameter corresponding to each beam index according to the receiving parameters corresponding to each measurement reference signal. The receiving parameter of each beam index is the sum of receiving parameters of the measurement reference signals including the beam index. Referring to Table 4 below, the method for determining the receiving parameter corresponding to each beam index is described. In Table 4, it is assumed that the user receives a total of four measurement reference signals, and each measurement reference signal corresponds to two beam indices.

Table 4 Example table illustrating how the receiving parameter of the beam index is determined

| Beam index / Index for the order of receptions | Beam 1 | Beam 2 | Beam 3 | Beam 4 |
|---|---|---|---|---|
| First reception | $P_1$ | 0 | $P_1$ | 0 |
| Second reception | 0 | $P_2$ | 0 | $P_2$ |
| Third reception | 0 | 0 | $P_3$ | $P_3$ |
| Fourth reception | $P_4$ | $P_4$ | 0 | 0 |
| Receiving parameter of the beam index | $P_1+P_4$ | $P_2+P_4$ | $P_1+P_3$ | $P_2+P_3$ |

In Table 4, the four measurement reference signals received by the user terminal correspond to beams 1 and 3, beams 2 and 4, beams 3 and 4, and beams 1 and 2, respectively, the receiving parameters of the four measurement reference signals are $P_1$, $P_2$, $P_3$, and $P_4$, respectively, and the receiving parameter of each beam index is the sum of receiving parameters of the measurement reference signals including the beam index. Therefore, the receiving parameter of each of the four beam indices is the sum of receiving parameters in each column in the table. The receiving parameters of the beam indices 1, 2, 3, and 4 are $P_1+P_4$, $P_2+P_4$, $P_1+P_3$, and $P_2+P_3$, respectively.

In some embodiments of the present application, the method further includes: selecting K beam indices from the M beam indices and reporting the K beam indices.

In the embodiment of the present application, the K beam indices may be selected from all the M beam indices, and the selected K beam indices may be reported. It is to be understood that the selected K beam indices may be some of all the beam indices.

Furthermore, based on the preceding embodiments of the present application, a receiving parameter corresponding to each of the K beam indices is reported.

Specifically, when the K beam indices are selected and reported, the receiving parameters of the K beam indices may be reported together.

In some embodiments of the present application, the method further includes: determining a measurement reference signal set in which the measurement reference signal is located and determining at least one beam index corresponding to each measurement reference signal within the measurement reference signal set.

Specifically, after the measurement reference signal is received, the measurement reference signal set in which the measurement reference signal is located may be determined, the beam indices corresponding to each measurement reference signal within the measurement reference signal set may be determined, and each measurement reference signal within the measurement reference signal set may correspond to one or more beam indices.

Furthermore, based on the preceding embodiments of the present application, all the measurement reference signals within the measurement reference signal set have the same frequency domain resources and code domain resources.

In the embodiment of the present application, the measurement reference signal set may be arranged such that all the measurement reference signals within the same measurement reference signal set have the same frequency domain resources and code domain resources.

In some embodiments of the present application, at least one beam index corresponding to each measurement reference signal forms one beam index set, and each beam index within the beam index set corresponds to at least one measurement reference signal among the measurement reference signals.

In the embodiment of the present application, each measurement reference signal may correspond to one or more beam indices, one or more beam indices corresponding to the same measurement reference signal may form one beam index set, and each beam index within each beam index set may correspond to at least one of the transmitted measurement reference signals.

Based on the preceding embodiments of the present application, the measurement reference signal set has at least two measurement reference signals corresponding to different beam index sets.

In the embodiment of the present application, at least two measurement reference signals may exist in the measurement reference signal set, each of the at least two measurement reference signals corresponds to one beam index set, and the beam index sets corresponding to the at least two measurement reference signals are different.

In some embodiments of the present application, the provided measurement reference signal determination method further includes: determining a receiving parameter corresponding to each beam index within the beam index set.

In the embodiment of the present application, one or more beam indices included in each received measurement reference signal form the beam index set. During reporting, the receiving parameter corresponding to each beam index within the beam index set of the corresponding measurement reference signal may be determined.

In some embodiments of the present application, the receiving parameter corresponding to each beam index includes the receiving parameter of the measurement reference signal corresponding to the beam index.

In the embodiment of the present application, the receiving parameter of each beam index within the beam index set may include the receiving parameter of the measurement reference signal corresponding to the beam index, and the beam index corresponding to the measurement reference signal may include the beam index for transmitting the measurement reference signal.

In some other embodiments of the present application, the receiving parameter corresponding to the beam index within the beam index set is the sum of receiving parameters of all the measurement reference signals including the corresponding beam index.

In the embodiment of the present application, the receiving parameter corresponding to each beam index within the beam index set may be the sum of receiving parameters of all the measurement reference signals corresponding to the beam index. For example, all the measurement reference signals corresponding to the beam index a may be all the measurement reference signals that are transmitted using the beam index a, and the beam index a is at least one of the beam indices used for the transmission of each measurement reference signal.

Furthermore, based on the preceding embodiments of the present application, the method further includes: selecting X beam indices from the beam indices and reporting the X beam indices.

In the embodiment of the present application, the X beam indices may be determined from the beam indices corresponding to the measurement reference signals, and the determined X beam indices may be reported.

In some embodiments of the present application, the method further includes: reporting the receiving parameters of the X beam indices.

Specifically, the receiving parameters of the determined X beam indices may be reported, and the method for determining the receiving parameters of the X beam indices may be determined according to any of the preceding embodiments.

In some exemplary embodiments, after receiving the measurement reference signal and determining the receiving parameter of each beam index, the user terminal may report the X beam indices to the base station, where X is an integer not less than 1. For example, the user may report X beam indices with the maximum receiving parameters to the base station; or the user may report X1 beam indices with the maximum receiving parameters and X2 beam indices with the minimum receiving parameters to the base station.

In some other exemplary embodiments, the user terminal may report the beam indices and the receiving parameters of the beam indices.

Furthermore, the preceding reporting may include periodic reporting. For example, the user may perform reporting once after receiving K measurement reference signals, where K is a positive integer; or the user may perform reporting once after receiving one measurement reference signal set.

It is to be understood that the preceding reporting may include aperiodic reporting, for example, reporting once after receiving the signaling from the base station, or reporting according to the aperiodic reporting method configured by the base station, or reporting triggered after certain conditions are satisfied, such as reporting the beam index and the receiving parameter when the maximum receiving parameter of the beam index is greater than a threshold μ.

Based on the preceding embodiments of the present application, the N value and/or N beam indices are determined according to the signaling of the first node.

In the embodiment of the present application, the first node may determine, through signaling, the number N of beam indices determined based on the measurement reference signal, or the first node may determine, through signaling, the N beam indices corresponding to the measurement reference signal.

Based on the preceding embodiments of the present application, the N beam indices correspond to N measurement reference signals that have a quasi co-location (QCL) relationship with the measurement reference signal.

Specifically, each beam index corresponds to one reference signal. For example, the correspondence between one measurement reference signal and the N beam indices has the following characteristics: one measurement reference signal has a QCL relationship with the N measurement reference signals, that is, each beam index corresponds to one reference signal.

In some other embodiments of the present application, each measurement reference signal that has a QCL relationship with the N measurement reference signals has a same QCL type. Specifically, the QCL relationship between one measurement reference signal and the N reference signals may have different types. For example, if the QCL relationship is QCL-TypeA, it means that one measurement reference signal and the N measurement reference signals have the same or similar Doppler frequency shift, Doppler spread, average delay, and delay spread; if the QCL relationship is QCL-TypeB, it means that one measurement reference signal and the N measurement reference signals have the same or similar Doppler frequency shift and Doppler spread; if the QCL relationship is QCL-TypeC, it means that one measurement reference signal and the N measurement reference signals have the same or similar Doppler frequency shift and average delay; and if the QCL relationship is QCL-TypeD, it means that one measurement reference signal and the N measurement reference signals have the same or similar spatial Rx parameters, that is, the receive beam or transmit beam of one measurement reference signal is similar to the beams of the N measurement reference signals.

Furthermore, based on the preceding embodiments of the present application, the receiving parameter includes at least one of the following: the RSRP, the RSSI, or the Reference Signal Receiving Quality.

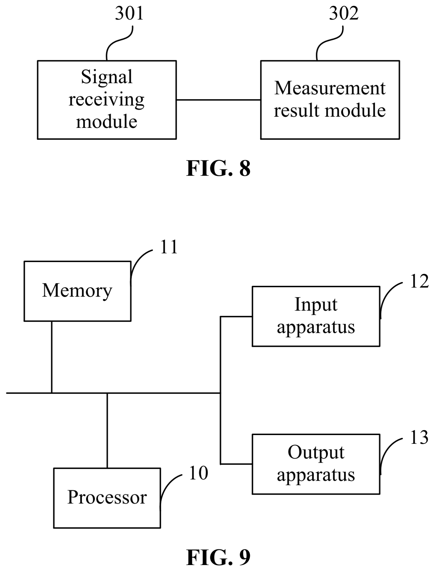

FIG. 8 is a diagram illustrating the structure of a measurement reference signal determination apparatus according to an embodiment of the present application. The apparatus may perform the measurement reference signal determination method according to any embodiment of the present application and has function modules and beneficial effects corresponding to the performed method. The apparatus may be implemented by software and/or hardware. As shown in FIG. 8, the apparatus of the embodiment of the present application includes a signal receiving module 301 and a measurement result module 302.

The signal receiving module 301 is configured to receive a measurement reference signal sent by a first node.

The measurement result module 302 is configured to determine N beam indices corresponding to the measurement reference signal within M beam indices, where N is an integer greater than or equal to 1, M denotes the total number of beam indices, and M is an integer greater than or equal to 1.

In the embodiment of the present application, the signal receiving module receives the measurement reference signal sent by the first node, and the measurement result module determines the N beam indices within the M beam indices according to the measurement reference signal so that one measurement reference signal can correspond to multiple beams, thereby improving the beam training speed and reducing the signal transmission delay.

In some embodiments of the present application, in the apparatus, the N beam indices are represented by a beam type B, the beam type B satisfies $B = C_M^N$, M denotes the total number of beam indices, and $C_M^N$ denotes the number of combinations of selecting N elements from M elements.

In some other embodiments of the present application, in the apparatus, the N beam indices are determined according to at least one of the following:

signaling information received from the first node;

the resource where the measurement reference signal is located, where the resource includes at least one of the following: the time domain resource, the frequency domain resource, or the code domain resource; or

a preset function.

In some embodiments of the present application, in the apparatus, the signaling information includes at least the signaling information of the preset function.

In some embodiments of the present application, in the apparatus, the input parameter of the preset function includes at least one of the following:

the resource where the measurement reference signal is located, where the resource includes at least one of the following: the time domain resource, the frequency domain resource, or the code domain resource; or

the index information of the resource where the measurement reference signal is located within a measurement reference signal resource set.

In some embodiments of the present application, in the apparatus, the output parameter of the preset function includes at least one of the following: the N beam indices or the beam type B.

In some embodiments of the present application, in the apparatus, the preset function includes the form below.

$$index_k(i) = \sum_{l=1}^{L} 2^l c\big(k\big[(i-1)L + l\big]\big).$$

k denotes the resource index of the measurement reference signal, the resource includes at least one of the time domain resource, the frequency domain resource, or the code domain resource, L denotes the maximum integer that satisfies $2^L \leq M$, M denotes the total number of beam indices, and $index(i)$ denotes the i-th beam index among the N beam indices.

In some embodiments of the present application, the apparatus further includes a receiving parameter module configured to determine a receiving parameter corresponding to each of the N beam indices.

In some embodiments of the present application, in the apparatus, the receiving parameter corresponding to each of the N beam indices includes a receiving parameter of one measurement reference signal at a predetermined time domain position, and the measurement reference signal at the predetermined time domain position includes the N beam indices.

In some embodiments of the present application, in the apparatus, the measurement reference signal has at least two different predetermined time domain positions, and the N beam indices corresponding to the measurement reference signal at the at least two different predetermined time domain positions are different.

In some embodiments of the present application, in the apparatus, the receiving parameter of the beam index is the sum of receiving parameters of the measurement reference signals including the beam index at a preset number of time domain positions.

In some embodiments of the present application, in the apparatus, the beam index set corresponding to the measurement reference signal at each of the preset number of time domain positions includes at least one beam index corresponding to the measurement reference signal.

In some embodiments of the present application, the apparatus further includes an index determination module configured to select K beam indices from the M beam indices and report the K beam indices.

In some embodiments of the present application, the apparatus is further configured to report a receiving parameter corresponding to each of the K beam indices.

In some embodiments of the present application, the apparatus is further configured to determine a measurement reference signal set in which the measurement reference signal is located and determine at least one beam index corresponding to each measurement reference signal within the measurement reference signal set.

In some embodiments of the present application, in the apparatus, all the measurement reference signals within the measurement reference signal set have the same frequency domain resources and code domain resources.

In some embodiments of the present application, in the apparatus, at least one beam index corresponding to each measurement reference signal forms one beam index set, and each beam index within the beam index set corresponds to at least one measurement reference signal among the measurement reference signals.

In some embodiments of the present application, in the apparatus, the measurement reference signal set has at least two measurement reference signals corresponding to different beam index sets.

In some embodiments of the present application, the apparatus is further configured to determine a receiving parameter corresponding to each beam index within the beam index set.

In some embodiments of the present application, in the apparatus, the receiving parameter corresponding to each beam index includes the receiving parameter of the measurement reference signal corresponding to the beam index.

In some embodiments of the present application, in the apparatus, the receiving parameter corresponding to the beam index within the beam index set is the sum of receiving parameters of all the measurement reference signals including the corresponding beam index.

In some embodiments of the present application, the apparatus is further configured to select X beam indices from the beam indices and report the X beam indices.

In some embodiments of the present application, the apparatus is further configured to report the receiving parameters of the X beam indices.

In some embodiments of the present application, in the apparatus, the N value and/or N beam indices are determined according to the signaling of the first node.

In some embodiments of the present application, in the apparatus, the N beam indices correspond to N reference signals that have a QCL relationship with the measurement reference signal.

In some embodiments of the present application, in the apparatus, each measurement reference signal that has a QCL relationship with the N measurement reference signals has a same QCL type.

In some embodiments of the present application, in the apparatus, the receiving parameter includes at least one of the following: the RSRP, the RSSI, or the Reference Signal Receiving Quality.

FIG. 9 is a diagram illustrating the structure of an electronic device according to an embodiment of the present application. The electronic device includes a processor 10, a memory 11, an input apparatus 12, and an output apparatus 13. One or more processors 10 may be included in the electronic device. One processor 10 is shown as an example in FIG. 9. The processor 10, the memory 11, the input apparatus 12, and the output apparatus 13 in the electronic device may be connected via a bus or in other manners. The connection via a bus is shown as an example in FIG. 9.

As a computer-readable storage medium, the memory 11 may be configured to store software programs, computer-executable programs, and modules, such as modules (the signal receiving module 301 and the measurement result module 302) corresponding to the measurement reference signal determination apparatus in the embodiment of the present application. The processor 10 executes the software programs, instructions, and modules stored in the memory 11 to perform function applications and data processing of the electronic device, that is, to perform the preceding measurement reference signal determination method.

The memory 11 may mainly include a program storage region and a data storage region. The program storage region may store an operating system and an application program required by at least one function. The data storage region may store data created according to the use of the electronic device. Additionally, the memory 11 may include a high-speed random-access memory and may also include a nonvolatile memory, such as at least one magnetic disk memory, a flash memory, or another nonvolatile solid-state memory. In some examples, the memory 11 may further include memories remotely disposed relative to the processor 10. These remote memories may be connected to the electronic device via a network. Examples of the network include, but are not limited to, the Internet, an intranet, a local area network, a mobile communication network, and a combination thereof.

The input apparatus 12 may be configured to receive inputted digital or character information and generate key signal input related to user settings and function control of the electronic device. The output apparatus 13 may include a display device such as a display screen.

The embodiments of the present application further provide a storage medium including computer-executable instructions. When executed by a computer processor, the computer-executable instructions are used for causing the computer processor to perform a measurement reference signal determination method. The method includes the following.

A measurement reference signal sent by a first node is received.

N beam indices corresponding to the measurement reference signal are determined within M beam indices, where N is an integer greater than or equal to 1, M denotes the total number of beam indices, and M is an integer greater than or equal to 1.

From the preceding description of embodiments, it is apparent to those skilled in the art that the present application may be implemented by software and necessary general-purpose hardware or may be implemented by hardware, but the former is a preferred implementation in many cases. Based on this understanding, the technical solutions of the present application substantially, or the part contributing to the related art, may be embodied in the form of a software product. The computer software product may be stored in a computer-readable storage medium such as a floppy disk, a read-only memory (ROM), a random-access memory (RAM), a flash memory, a hard disk, or an optical disk of a computer and includes several instructions for causing a computer device (which may be a personal computer, a server, or a network device) to perform the method in the embodiments of the present application.

It is to be noted that units and modules included in the preceding embodiment of the apparatus are divided according to functional logic, and the division is not limited to this as long as the corresponding functions can be implemented. Additionally, the specific names of function units are used for distinguishing between each other and are not to limit the scope of the present application.

It is to be understood by those of ordinary skill in the art that some or all steps of the preceding method and function modules/units in the preceding apparatus or device may be implemented as software, firmware, hardware, and suitable combinations thereof.

In the hardware implementation, the division of the preceding function modules/units may not correspond to the division of physical components. For example, one physical component may have multiple functions, or one function or step may be performed jointly by several physical components. Some or all physical components may be implemented as software executed by a processor such as a central processing unit, a digital signal processor, or a microprocessor, may be implemented as hardware, or may be implemented as integrated circuits such as application-specific integrated circuits. The corresponding software may be distributed on computer-readable media. The computer-readable media may include computer storage media (or non-transitory media) and communication media (or transitory media). As is known to those having ordinary skill in the art, the term computer storage media includes volatile and nonvolatile media as well as removable and non-removable media implemented in any method or technology for storing information (such as computer-readable instructions, data structures, program modules, or other data). The computer storage media include, but are not limited to, RAMs, ROMs, electrically erasable programmable read-only memories (EEPROMs), flash memories, or other memory technologies; compact disc read-only memories (CD-ROMs), digital versatile discs (DVDs), or other optical disc memories; magnetic cassettes, magnetic tapes, magnetic disk memories, or other magnetic storage devices; or any other media used for storing the desired information and accessible by a computer. Additionally, as is known to those having ordinary skill in the art, the communication media generally include computer-readable instructions, data structures, program modules, or other data in carriers or in modulated data signals transported in other transport mechanisms and may include any information delivery medium.

**Claims**

1. A measurement reference signal determination method, applied to a second node and comprising:

   receiving a measurement reference signal sent by a first node; and
   determining N beam indices corresponding to the measurement reference signal within M beam indices, wherein N is an integer greater than or equal to 1, M denotes a total number of beam indices, and M is an integer greater than or equal to 1.

2. The method of claim 1, wherein the N beam indices are represented by a beam type B, and the beam type B satisfies $B = C_M^N$ , wherein $C_M^N$ denotes a number of combinations of selecting N elements from M elements.

3. The method of claim 1, wherein the N beam indices are determined according to at least one of the following:

   signaling information received from the first node;
   a resource where the measurement reference signal is located, wherein the resource comprises at least one of the following: a time domain resource, a frequency domain resource, or a code domain resource; or
   a preset function.

4. The method of claim 3, wherein the signaling information comprises signaling information of the preset function.

5. The method of claim 3, wherein an input parameter of the preset function comprises at least one of the following:

   the resource where the measurement reference signal is located, wherein the resource comprises at least one of the following: the time domain resource, the frequency domain resource, or the code domain resource; or
   index information of the resource where the measurement reference signal is located within a measurement reference signal resource set.

6. The method of claim 3, wherein an output parameter of the preset function comprises at least one of the following: the N beam indices or a beam type B.

7. The method of claim 3, wherein the preset function comprises the following form:

$$index_k(i) = \sum_{l=1}^{L} 2^l c\big(k\big[(i-1)L + l\big]\big);$$

wherein k denotes a resource index of the measurement reference signal, the resource comprises at least one of the time domain resource, the frequency domain resource, or the code domain resource, L denotes a maximum integer that satisfies $2^L \leq M$, and *index(i)* denotes an i-th beam index among the N beam indices.

8. The method of claim 1, further comprising: determining a receiving parameter corresponding to each of the N beam indices.

9. The method of claim 8, wherein the receiving parameter corresponding to each of the N beam indices comprises a receiving parameter of one measurement reference signal at a predetermined time domain position, and the one measurement reference signal at the predetermined time domain position comprises the N beam indices.

10. The method of claim 1, wherein the measurement reference signal has at least two different predetermined time domain positions, and N beam indices corresponding to the measurement reference signal at the at least two different predetermined time domain positions are different.

11. The method of claim 9, wherein the receiving parameter corresponding to one beam index is a sum of receiving parameters of measurement reference signals comprising the one beam index at a preset number of time domain positions.

12. The method of claim 11, wherein a beam index set corresponding to the measurement reference signal at each of the preset number of time domain positions comprises at least one beam index corresponding to the measurement reference signal.

13. The method of claim 1, further comprising: selecting K beam indices from the M beam indices and reporting the K beam indices, wherein K is an integer, K is greater than or equal to 1, and K is less than or equal to M.

14. The method of claim 13, further comprising: reporting a receiving parameter corresponding to each of the K beam indices.

15. The method of claim 1, further comprising: determining a measurement reference signal set in which the measurement reference signal is located and determining at least one beam index corresponding to each measurement reference signal within the measurement reference signal set.

16. The method of claim 15, wherein all measurement reference signals within the measurement reference signal set have same frequency domain resources and code domain resources.

17. The method of claim 15, wherein at least one beam index corresponding to each measurement reference signal forms one beam index set, and each beam index within the beam index set corresponds to at least one measurement reference signal among measurement reference signals.

18. The method of claim 15, wherein the measurement reference signal set has at least two measurement reference signals corresponding to different beam index sets.

19. The method of claim 17, further comprising: determining a receiving parameter corresponding to each beam index within the beam index set.

20. The method of claim 19, wherein the receiving parameter corresponding to each beam index comprises a receiving parameter of the measurement reference signal corresponding to the beam index.

21. The method of claim 19, wherein the receiving parameter corresponding to each beam index within the beam index set is a sum of receiving parameters of all measurement reference signals comprising the corresponding each beam index.

22. The method of claim 17, further comprising: selecting X beam indices from the beam indices and reporting the X beam indices.

23. The method of claim 22, further comprising: reporting receiving parameters of the X beam indices.

24. The method of claim 1, wherein an N value and/or the N beam indices are determined according to signaling of the first node.

25. The method of claim 1, wherein the N beam indices correspond to N measurement reference signals that have a quasi co-location, QCL, relationship with the measurement reference signal.

26. The method of claim 25, wherein each measurement reference signal that has a QCL relationship with the N measurement reference signals has a same QCL type.

27. The method of any one of claims 8, 9, 11, 14, 18, 19, 20, or 22, wherein the receiving parameter comprises at least one of the following: Reference Signal Receiving Power, RSRP, a Received Signal Strength Indicator, RSSI, or Reference Signal Receiving Quality.

28. An electronic device, comprising:

   one or more processors; and
   a memory configured to store one or more programs;
   wherein the one or more processors are configured to perform the measurement reference signal determination method of any one of claims 1 to 27 when executing the one or more programs.

29. A computer-readable storage medium storing one or more programs configured to, when executed by one or more processors, cause the one or more processors to perform the measurement reference signal determination method of any one of claims 1 to 27.

Receive a measurement reference signal sent by a first node 110

Determine N beam indices corresponding to the measurement reference signal within M beam indices 120

**FIG. 1**

Period T

Measurement reference signal 0

Measurement reference signal 1

....
..

Measurement reference signal i

Time t

Index group 0

Index group 1

....
..

Index group i

**FIG. 2**

Beam type 1

Beam type 2

Beam type 3

Measurement reference signal 1

Measurement reference signal 2

Measurement reference signal 3

Time

**FIG. 3**

Time
interval △t

Measurement
reference signal set 1

Measurement
reference signal set 2

......

Measurement
reference
signal 0

Measurement
reference
signal 1

......

Measurement
reference
signal L–1

**FIG. 4**

Frequency

Reference
signal 1

Reference
signal 2

Reference
signal 3

Reference
signal 1

Reference
signal 2

Reference
signal 3

Time

Measurement
reference signal set
1

Measurement
reference signal set
2

**FIG. 5**

Frequency

Time

| | | Time-frequency resources of measurement reference signals 1, 2, 3, and 4 | | | Time-frequency resources of measurement reference signals 9, 10, 11, and 12 |

| | | Time-frequency resources of measurement reference signals 5, 6, 7, and 8 | | | Time-frequency resources of measurement reference signals 13, 14, 15, and 16 |

**FIG. 6**

Input parameter group 1

Input parameter group 2

Input parameter group 3

Input parameter group X–2

Input parameter group X–1

Input parameter group X

Beam type 1

Beam type 2

Beam type $C_M^N$-1

Beam type $C_M^N$

**FIG. 7**

301

302

Signal receiving module

Measurement result module

**FIG. 8**

11

Memory

12

Input apparatus

13

Output apparatus

10

Processor

**FIG. 9**

## INTERNATIONAL SEARCH REPORT

| International application No. |
|---|
| **PCT/CN2024/094111** |

| A. | CLASSIFICATION OF SUBJECT MATTER |
|---|---|

H04W 72/044(2023.01)i

According to International Patent Classification (IPC) or to both national classification and IPC

| B. | FIELDS SEARCHED |
|---|---|

Minimum documentation searched (classification system followed by classification symbols)

IPC: H04W, H04L

Documentation searched other than minimum documentation to the extent that such documents are included in the fields searched

Electronic data base consulted during the international search (name of data base and, where practicable, search terms used)

CNTXT, DWPI, ENTXT, VEN, WPABS, CJFD, 3GPP: 波束, 波束类型, 波束索引, 波束训练, 参考信号, 测量, 测量参考信号, 接收参数, 信令信息, 多天线, 多波束; beam, type, index, training, reference signal, RS, measur+, receiv+, parameter, signaling, multi-antenna, multi-beam

| C. | DOCUMENTS CONSIDERED TO BE RELEVANT |
|---|---|

| Category* | Citation of document, with indication, where appropriate, of the relevant passages | Relevant to claim No. |
|---|---|---|
| X | CN 111132183 A (DATANG MOBILE COMMUNICATIONS EQUIPMENT CO., LTD.) 08 May 2020 (2020-05-08) claims 1-16, and description, paragraphs 31-92 | 1-29 |
| A | CN 116131893 A (ZTE CORP.) 16 May 2023 (2023-05-16) entire document | 1-29 |
| A | CN 112929139 A (ZTE CORP.) 08 June 2021 (2021-06-08) entire document | 1-29 |
| A | US 2019356398 A1 (LG ELECTRONICS INC.) 21 November 2019 (2019-11-21) entire document | 1-29 |

☐ Further documents are listed in the continuation of Box C.  ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **08 August 2024** | **09 August 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/094111**

| Patent document cited in search report | | | Publication date (day/month/year) | Patent family member(s) | | | Publication date (day/month/year) |
|---|---|---|---|---|---|---|---|
| CN | 111132183 | A | 08 May 2020 | None | | | |
| CN | 116131893 | A | 16 May 2023 | EP | 3499739 | A1 | 19 June 2019 |
| | | | | EP | 3499739 | A4 | 22 July 2020 |
| CN | 112929139 | A | 08 June 2021 | None | | | |
| US | 2019356398 | A1 | 21 November 2019 | WO | 2018151341 | A1 | 23 August 2018 |
| | | | | US | 11239925 | B2 | 01 February 2022 |
| | | | | US | 2022109514 | A1 | 07 April 2022 |
| | | | | US | 11575451 | B2 | 07 February 2023 |

Form PCT/ISA/210 (patent family annex) (July 2022)